# EUROPEAN PATENT APPLICATION

(11) **EP 2 692 398 A1**
(43) Date of publication of application: **05.02.2014**
(21) Application number: 13177897.9
(22) Date of filing: 24.07.2013
(51) Int. Cl.: A63F 13/10

(54) **Character display device**

(30) Priority: 01.08.2012 JP 2012171534; 11.07.2013 JP 2013145237
(71) Applicant: Square Enix Co., Ltd., Tokyo 160-8430 (JP)
(72) Inventor: Saotome, Hiroaki, Tokyo, Tokyo 160-8430 (JP)
(74) Representative: Pitchford, James Edward

(57) **Abstract**

When a predetermined condition is satisfied in a game and a scenario mode is started (step S1), a predetermined scenario is displayed (step S2). When an animation in the scenario is completely displayed (step S3), a transmission waiting state is started and idling of a character displayed on a display screen is displayed (step S4). The idling display is performed based on the pose of the character in the transmission waiting state. The idling display is performed by deciding the angle of a target pose based on difference information of a joint management table.

## Description

### CROSS REFERENCE TO RELATED APPLICATIONS

The present disclosure relates to subject matter contained in Japanese Patent Application No. 2012-171534, filed on August 1, 2012, and Japanese Patent Application No. 2013-145237, filed on July 11, 2013, the disclosure of which is expressly incorporated herein by reference in its entirety.

### TECHNICAL FIELD

The present invention relates to a character display device that can display a character with reality and vigorousness.

### BACKGROUND ART

In the past, in an roll playing game (RPG) and the like, when an event occurs during a game, a main mode of the game capable of operations such as moving a player character on a field map and speaking to other characters may be temporarily suspended, and a change to a scenario mode of displaying a message and an animation for describing the story development of the game may occur.

In this scenario mode, when the display of an animation and a message is continuously performed, the display of the next message may be started before some player completely reads the message. Therefore, when the message amount is large, a message transmission waiting state is maintained until the player operates to display the next message.

In the scenario mode, it is common that the movement of a character displayed by an animation is related with the content of a message. However, in general, when the message transmission waiting state is maintained, the prepared animation is ended and the character is in a stationary state. However, when a character displayed in a game screen is completely stationary, the vigorousness and reality of the character are lost, resulting in an uncomfortable feeling.

In addition to the case of displaying a character in the scenario mode as described above, in the case of operating a menu screen in order to change the basic settings of a game, or in the case of receiving a request for a match play or a team play from another game apparatus through communication, a main mode of the game may be temporarily suspended and the movement of a character in the screen may be temporarily stopped. Also in this case, it is required to display the character without losing the vigorousness and reality of the character.

In the past, in order to solve this problem, an animation according to a waiting pose of the character is produced and displayed, or a movement between a pose corresponding to a message transmission waiting state and a basic pose of the character standing straight on the ground surface is idled by displaying a separately-prepared animation, changing to the basic pose, and slightly moving the character up and down as if the character breathes.

### SUMMARY OF INVENTION

However, when an animation according to a waiting pose of the character is produced for every message transmission waiting state, animations need to be produced with respect to various poses, thus increasing the production cost. Also, in this case, the animation data amount increases.

The animation production cost also increases in the case of idling a movement between a pose corresponding to a message transmission waiting state and a basic pose by displaying a separately-prepared animation, changing to the basic pose, and slightly moving the character up and down. Also, since the character returns to the basic pose at every message transmission waiting state, the reality of the game is lost.

Purposes of embodiments of the present invention are to solve these problems. A purpose of an embodiment of the present invention is to provide a character display device that can display a character with vigorousness and reality, without changing the pose of a character, by moving the character as if the character breathes. Another purpose of an embodiment of the present invention is to provide a character display device that can reduce the production cost by removing the need to produce an animation with respect to each pose of a character, and can reduce the consumption of memory capacity and the processing load caused by data reading by reducing the animation data amount.

The present invention relates to a character display device which displays a character of an arbitrary pose on a display screen, comprising: a basic behavior information memory that stores basic behavior information for controlling a behavior of a virtual skeleton of a character in a basic pose of the character; a virtual skeleton controller that controls a behavior of the virtual skeleton of the character in an arbitrary pose based on the basic behavior information stored in the basic behavior information memory; and a character displayer that displays the character by modeling the character based on the virtual skeleton controlled by the virtual skeleton controller.

In many games, when a character takes a basic pose of standing straight on the ground surface and temporarily stands still, the reality of looking as if the character breathes is provided by repeatedly changing the angle of a joint connecting the skeletons of the character. In the present invention, an angle variation of each joint in the basic pose is stored as basic behavior information, and the angle of each joint in an arbitrary pose different from the basic pose is repeatedly changed based on the basic behavior information. For example, when the character takes a basic pose, an addition motion identical to an addition motion applied to give an action (for example, an action looking as if the character breathes) to the character can be applied when the character takes an arbitrary pose. Here, in the present invention, the arbitrary pose is different from the basic pose, and may be any pose that can be taken by the character.

As a result, during a game, when the character temporarily stops while taking an arbitrary pose, such as a message transmission waiting state, the display with reality of looking as if the character breathes can be performed. Also, in the present invention, since an animation needs not to be produced with respect to each pose, the production cost can be reduced, and the consumption of memory capacity and the processing load caused by data reading can be reduced by reducing the animation data amount.

In the present invention, it is preferable that the virtual skeleton controller includes a behavior information decider that decides a behavior information about the behavior of the virtual skeleton of the character corresponding to the arbitrary pose based on the basic behavior information stored in the basic behavior information memory, and the virtual skeleton controller controls the behavior of the virtual skeleton of the character in the arbitrary pose based on the behavior information decided by the behavior information decider.

The behavior information corresponding to the arbitrary pose of the character can be calculated based on the basic behavior information set in the basic pose, and the behavior of the virtual skeleton of the character in the arbitrary pose can be controlled according to the calculation result. That is, the addition motion given to the virtual skeleton can be changed according to the pose taken by the character. For example, according to the angle of a virtual joint in the state where the character stands still in the arbitrary pose, the degree of the angle of the virtual joint movable in giving a motion to the character of the arbitrary pose can be changed.

In the present invention, it is preferable that when a region of the character is fixed at a specific position, the virtual skeleton controller uses inverse kinematics to control the behavior of the virtual skeleton such that the portion maintains a fixed state.

When the foot of the character contacts the ground surface, or when the hand of the character contacts a wall, each joint can be moved while fixing the position of the foot or the hand contacting the ground surface or the wall, by inverse kinematics (IK) control. For example, in the case where the foot of the character contacts the ground surface, when the behavior of the virtual skeleton of the character is controlled simply based on the behavior information of the basic pose, the contact position between the foot and the ground surface may change gradually even when the character does not take a step forward. By using inverse kinematics (IK) control, without changing the contact position between the foot and the ground surface, the movement of the character of the arbitrary pose can be controlled. In addition, among the actions given to the character in the arbitrary pose, an action of a region controlled by inverse kinematics is erased and canceled by being overwritten by the inverse kinematics control.

In the present invention, it is preferable that the basic behavior information memory stores a plurality of pieces of basic behavior information in association with a plurality of respective different conditions, and the behavior information decider decides the basic behavior information according to the condition.

With respect to the arbitrary pose of the character, even in the same pose, the movement mode of the character can be changed according to a condition such as a situation during the game. For example, in comparison with the case of a normal state (for example, a state where a hit point of the character is equal to or more than a predetermined value), in a rough-breath state (for example, a state where a hit point of the character is less than a predetermined value), since settings such as the increase of the movement of the character can be performed, the movement mode of the character can be diversified.

The present invention relates to a character display method which is executed to display a character of an arbitrary pose on a display screen of a computer apparatus, comprising: storing basic behavior information for controlling a behavior of a virtual skeleton of a character in a basic pose of the character, in a memory; controlling a behavior of the virtual skeleton of the character in an arbitrary pose based on the basic behavior information stored in the memory; and displaying the character by modeling the character based on the virtual skeleton with the controlled behavior.

The present invention also relates to a character display program which executes a computer apparatus to display a character of an arbitrary pose on a display screen, the character display program causing the computer apparatus to function as: a basic behavior information memory that stores basic behavior information for controlling a behavior of a virtual skeleton of a character in a basic pose of the character; a virtual skeleton controller that controls a behavior of the virtual skeleton of the character in an arbitrary pose based on the basic behavior information stored in the basic behavior information memory; and a character displayer that displays the character by modeling the character based on the virtual skeleton controlled by the virtual skeleton controller.

### BRIEF DESCRIPTION OF DRAWINGS

FIG. 1 is a block diagram illustrating a configuration of a game apparatus according to an embodiment of the present invention;
FIG. 2 is a diagram illustrating an example of a display screen of the game apparatus according to an embodiment of the invention;
FIGS. 3A and 3B are diagrams illustrating the relation between difference information and a skeleton around an elbow joint;
FIG. 4 is a diagram illustrating a joint management table according to an embodiment of the present invention;
FIG. 5 is a diagram illustrating a flowchart of scenario display processing according to an embodiment of the present invention; and
FIG. 6 is a diagram illustrating a flowchart of idling display processing according to an embodiment of the present invention.

### DESCRIPTION OF EMBODIMENTS

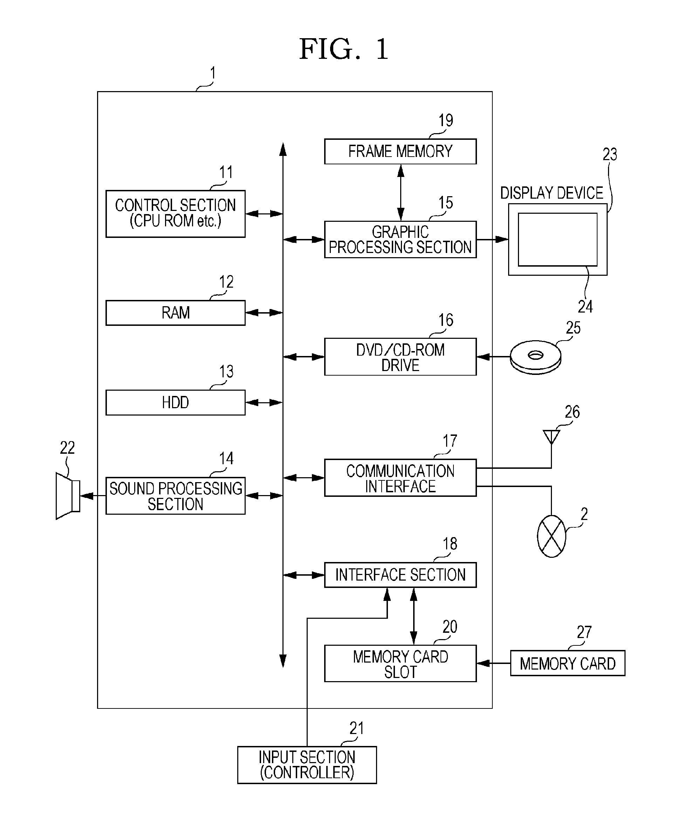

FIG. 1 is a block diagram illustrating a configuration of a game apparatus according to an embodiment of the present invention. A game apparatus 1 includes a control section 11, a random access memory (RAM) 12, a hard disk drive (HDD) 13, a sound processing section 14, a graphic processing section 15, a DVD/CD-ROM drive 16, a communication interface 17, and an interface section 18, which are connected to one another via an internal bus.

The control section 11 includes a central processing unit (CPU) and a read only memory (ROM). The control section 11 executes a program stored in the HDD 13 or a storage medium 25, to control the game apparatus 1. Also, the control section 11 includes an internal timer that counts time. The RAM 12 is a work area of the control section 11. The HDD 13 is a storage region for storing programs and data.

The DVD/CD-ROM drive 16 may mount the storage medium 25 storing a game program, such as a DVD-ROM or a CD-ROM. The storage medium 25 stores a program and data for performing a game. A program and data necessary to progress a game are read from the storage medium 25 by the DVD/CD-ROM drive 16 and are loaded into the RAM 12.

The control section 11 reads the program and data necessary to progress a game from the RAM 12, and performs processing thereof. By processing the program and data loaded into the RAM 12, the control section 11 outputs a sound output instruction to the sound processing section 14 and outputs a drawing command to the graphic processing section 15.

The sound processing section 14 is connected to a sound output device 22 that is a speaker. When the control section 11 outputs a sound output instruction to the sound processing section 14, the sound processing section 14 outputs a sound signal to the sound output device 22.

The graphic processing section 15 is connected to a display device 23. The display device 23 includes a display screen 24. When the control section 11 outputs a drawing command to the graphic processing section 15, the graphic processing section 15 develops an image in a frame memory (frame buffer) 19 and outputs a video signal for displaying an image on the display screen 24. The graphic processing section 15 executes drawing of one image in units of frames. A one-frame time of the image is, for example, 1/30 second.

An input section (controller) 21 and a memory card slot 20 are connected to the interface section 18. Input information from the input section 21 by a player is stored in the RAM 12, and the control section 11 executes a variety of calculation processing based on the input information. Also, according to an instruction from the control section 11, the interface section 18 performs processing for storing data about a game progression status stored in the RAM 12 in a memory card 27, and processing for reading data stored in the memory card 27 and transmitting the data to the RAM 12.

The communication interface 17 is connected to a communication network 2 in a wireless or wired manner, and communicates operation instruction information and information about a game progression status with a server apparatus 3 on an as-needed basis. Also, the communication interface 17 may perform wireless communication with another game apparatus 1 through a communication unit having an antenna 26.

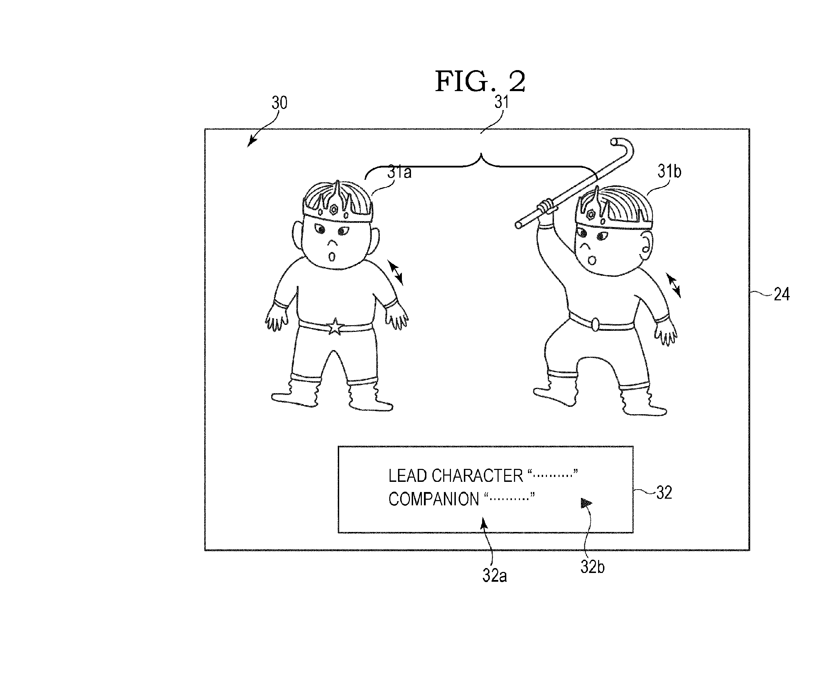

FIG. 2 is a diagram illustrating an example of a display screen of the game apparatus according to an embodiment of the invention. By operating and moving a player character on a field map, temporarily suspending the main story of a game performing a virtual combat with an enemy character, and displaying a comment about a story in the game and an aspect of conversations between characters, a game screen in a scenario mode of transmitting the story development of the game to the player is displayed on the display screen 24 of FIG. 2.

The display screen 24 is provided with a virtual space display region 30 for displaying an aspect in a virtual space. A character 31a that is a lead character of the game and a character 31b that is a companion of the lead character are displayed in the virtual space display region 30. A message display window 32 is provided at a bottom side of the display screen 24. A message 32a such as a comment about an event happening in the game or the content of a conversation between the character 31a and the character 31b is displayed in the message display window 32.

Also, when there is a continuation of the message 32a or an animation displayed in the scenario mode, a transmission button 32b is displayed at the tail end of the conversation of the character 31. When the transmission button 32b is selected by the player's operation, a transmission waiting state is canceled. Then, the next message 32a is displayed on the message display window 32, and a new animation is displayed on the virtual space display region 30 in order to display the development of the next story.

In the transmission waiting state, the character 31a takes a basic pose of dropping both hands downward symmetrically and standing straight on the ground surface with both feet. Instead of taking a basic pose of standing straight on the ground surface, the character 31b takes a pose other than the basic pose by swing a stick with the right hand and not contacting the ground surface with the right foot. The pose other than the basic pose may be any pose such as a running pose, a crouching pose, or a pose in the middle of a victory pose.

In general, when the character 31 takes the basic pose, the vigorousness and reality of looking as if the character 31 breathes can be provided by repeatedly changing the angle of a joint connecting the skeletons of the character 31. In this case, with respect to each joint, the relation between time and the degree of an angle changing from a reference angle in the basic pose (hereinafter, referred to as an angular change degree) is predetermined. Specifically, when the reference angle in the basic pose is 30° and the angle after one frame is 32°, the angular change degree is 2°. Thus, in a situation where the angular change degree after one frame is 2° and the angular change degree after two frames is 4°, with respect to the maximum change after the start of a change of angle, the correspondence relation between the angular change degree and the lapse time after the change of angle (hereinafter, referred to as a change time) is predetermined. Hereinafter, information about the change time and the angular change degree set with respect to each joint will be referred as difference information.

The correspondence relation between the change time and the angular change degree may be set with respect to all frames until the end of the change, and may be set every five frames, such as after 5 frames, after 10 frames, and after 15 frames. In this case, with respect to intervening frames such as frames 1 to 4 and frames 6 to 9, the correspondence relation of which with respect to the angular change degree is not set, the angular change degree is calculated in each case.

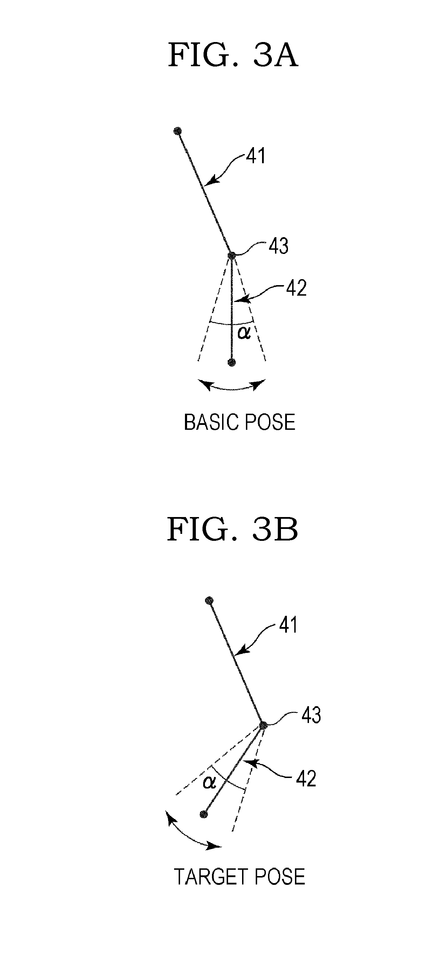

In the present invention, when idling of the character 31 is displayed in a pose other than the basic pose (hereinafter, referred to as a target pose), difference information applied to the target pose is decided based on difference information set in the basic pose. FIGS. 3A and 3B are diagrams illustrating the relation between difference information and a skeleton around an elbow joint. In FIGS. 3A and 3B, in comparison with the basic pose, the target pose is narrowed in terms of an angle formed at an elbow joint 43 by an upper-arm bone 41 and a forearm bone 42. However, within a movable range of the forearm bone 42, the angle formed at the elbow joint 43 in the target pose may be wider than that in the basic pose.

When the maximum of the angular change degree (hereinafter, referred to as the maximum angular change degree) with respect to the angle of the elbow joint 43 formed by the upper-arm bone 41 and the forearm bone 42 in the basic pose is α and the number of frames necessary for the change (hereinafter, referred as the necessary frame number) is y as illustrated in FIG. 3A, the maximum angular change degree in the target pose may also be α and the necessary frame number may also be γ as illustrated in FIG. 3B. When the maximum angular change degree is α, a change may be made within a range of 0 to α from the reference angle of the elbow joint 43 in the basic pose, and a change occurs repeatedly within the range. Likewise, also in the case of the target pose, a change may be made within a range of 0 to α from the reference angle of the elbow joint 43 in the target pose, and a change occurs repeatedly within the range.

Also, in the above case, the necessary frame number may be the same, and the angular change degree in the target pose may be decided by multiplying the angular change degree in the basic pose by a coefficient. Therefore, the difference information in the target pose is specified based on the difference information in the basic pose. In addition, the coefficient may be determined based on the ratio between the reference angle of the elbow joint 43 in the basic pose and the reference angle of the elbow joint in the target pose. That is, as the angle of the elbow joint 43 in the target pose increases, the coefficient also increases in proportion to the degree of the angle.

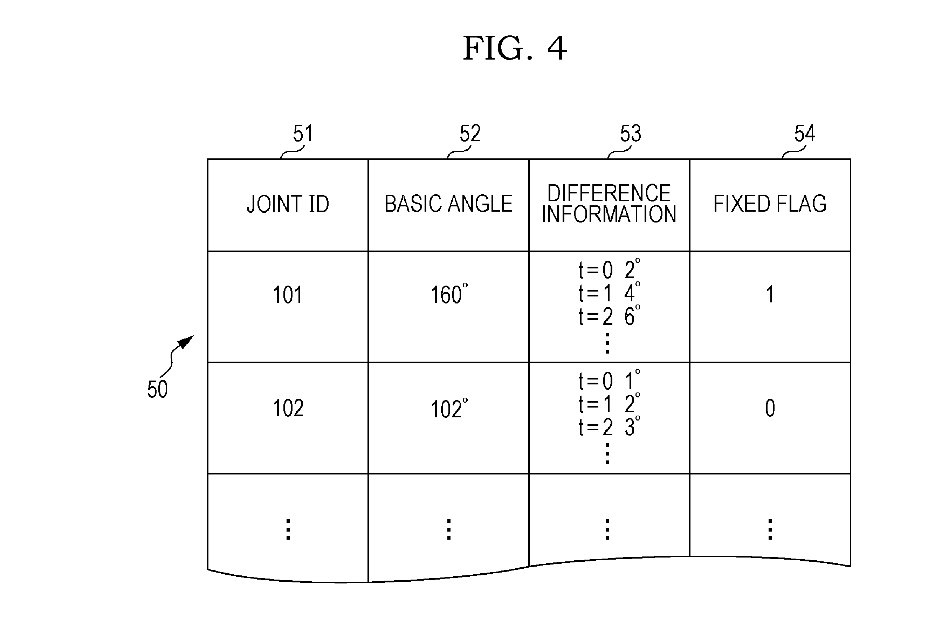

Next, a joint management table will be described. FIG. 4 is a diagram illustrating a joint management table according to an embodiment of the present invention. A joint management table 50 is set in the RAM 12 with respect to each character 31. In the joint management table 50, a joint ID 51, a basic angle 52, difference information 53, and a fixed flag 54 are stored in association with the joint ID 51. The basic angle 52 is a reference angle of a target joint in the basic pose. The angular change degree of the joint at each frame in the target pose is decided based on the difference information 53 of the joint management table 50. The fixed flag 54 will be described later.

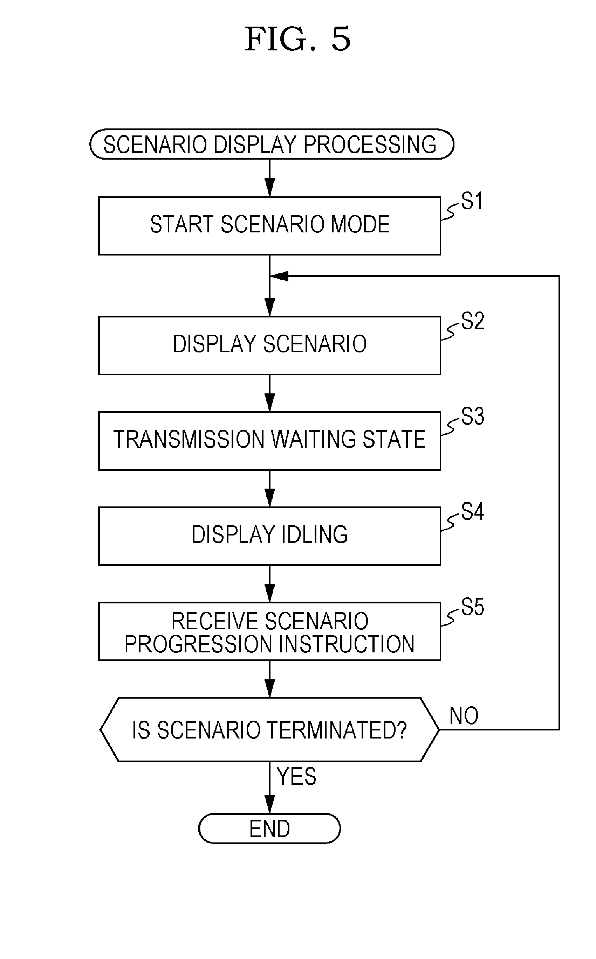

Next, the case of applying the character display processing of the present invention to a scenario mode of an RPG will be described. FIG. 5 is a diagram illustrating a flowchart of scenario display processing according to an embodiment of the present invention.

First, when a predetermined condition is satisfied in a game, a scenario mode is started (step S1). Herein, the predetermined condition may be set appropriately according to the content of the game. Examples of the predetermined condition include the arrival of a player character at a specific place, the obtainment of a specific item by the player character, the speaking of the player character to a specific character, and the winning the combat of the player character with a specific character. When the scenario mode is started, the main story of the game is temporarily suspended. In this case, until the scenario mode is terminated, an action of moving the player character on a field map, speaking to another character, or using an item cannot be taken.

When the scenario mode is started in step S1, a predetermined scenario is displayed (step S2). Herein, a plurality of types of scenarios may be prepared, and the displayed scenario is decided according to which condition is satisfied in order to start the scenario mode. When a scenario starts to be displayed, a message 32a and an animation are displayed according to the scenario.

When the predetermined animation is displayed from beginning to end, a transmission waiting state (transmission waiting state) is started. When the transmission waiting state is started in step S3, idling of the character 31 displayed on the display screen 24 is displayed (step S4). The idling display is performed based on the pose of the character 31 in the transmission waiting state. The idling display is performed by calculating the frame-by-frame angular change degree of the target pose based on the difference information 53 of the joint management table 50 and adding the calculated angular change degree to the reference angle of the target pose.

Also, when the transmission waiting state is started, the transmission button 32b is displayed at the tail end of the message 32a displayed in the message display window 32. When a scenario progression instruction is received by the operation input of the player to the input section 21 (step S5), the transmission waiting state is canceled and the display of the transmission button 32b is erased.

Even when the transmission waiting state is canceled, if there remain a message and an animation that are not yet displayed, the scenario mode is not terminated (NO in step S6). In this case, the scenario display processing returns to step S2, and the next message 32a and animation start to be displayed. Processing of steps S2 to S5 is repeatedly executed until all of the message 32a and animation in the started scenario are displayed.

When all of the message 32a and animation in the started scenario are displayed and the scenario is terminated (YES in step S6), the temporary suspension of the main game story is canceled and a series of processing is terminated. When the temporary suspension of the main game story is canceled, an operation of moving the player character on a field map or causing the player character to speak to another character can be performed and a series of processing is ended.

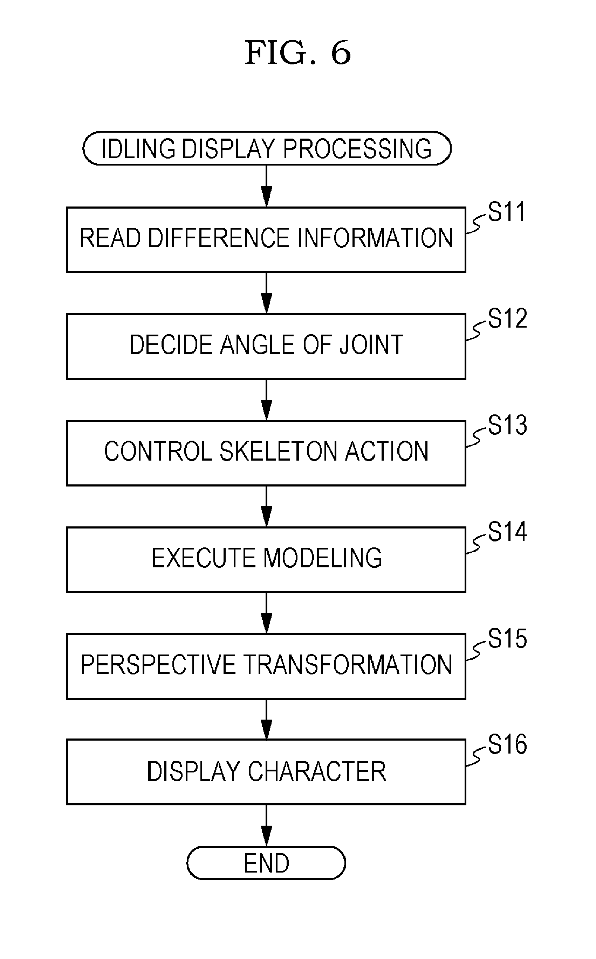

Next, the idling display processing in step S5 will be described. FIG. 6 is a diagram illustrating a flowchart of scenario display processing according to an embodiment of the present invention. When idling display processing is started, the difference information 53 about each joint of the character 31 displayed on the display screen 24 is read from the joint management table 50 (step S11). Then, the angle of the joint at each frame is decided by adding/subtracting the angular change degree obtained from the difference information 53 to/from the reference angle before the start of the change in the target pose of the character 31 (step S12). For example, when the reference angle in the basic pose is 30°, the reference angle before the start of the change in the target pose is 50°, the angular change degree after one frame in the difference information 53 is 2°, the angular change degree after two frames is 4° and the angular change degree after three frames is 6°, the angle of the joint after one frame is 52°, the angle of the joint after two frames is 54° and the angle of the joint after three frames is 56°. Thus, the skeleton action of the character 31 is controlled based on the decided angles (step S13).

In addition, the difference information read from the joint management table 50 in step S11 may be prepared in plurality, and may be changed according to conditions such as the game progression state, the weather and temperature in a virtual world, and the status of the player character. For example, when the temperature is low due to the bad weather in the virtual world, the difference information with a small angular change degree is used; and when the temperature is high, the difference information with a large angular change degree is used. Also, when the hit point of the character is small, the difference information with a small necessary frame number is used; and when the hit point is large, the difference information with the small frame number is used.

When the skeleton action of step S13 is controlled, if any position in a region of the character needs to be fixed (for example, if the character 31 contacts the ground surface with his feet, puts his hands on a wall, or hangs from an arm rail) (that is, if the position needs to be fixed with respect to a portion of the joint of the character), inverse kinematics is used to decide the position and angle of the joint such that the region maintains a fixed state. Among the actions controlled based on the difference information, an action of a region controlled by inverse kinematics is erased and canceled by being overwritten by the inverse kinematics control. Therefore, it is possible to control the movement of the skeleton of the character 31 without changing the position with respect to the fixed region.

In addition, whether the joint connecting the skeletons of the character 31 is fixed at a specific position or not may be decided according to whether the fixed flag 54 is set in the joint management table 50 or not. For example, when the foot of the character 31 contacts the ground surface, the fixed flag 54 is set to the joint point at the leading end of the contacting foot. When the character 31 jumps up and does not contact the ground surface with his feet, the fixed flag 54 is canceled.

Then, the modeling of the character 31 is executed based on the skeleton controlled in step S13 (step S14). In addition, the inside of a virtual space is perspectively transformed on a virtual screen, and image data is drawn (step S15). Then, the character 31 is displayed on the display screen 24 (step S16), and a series of processing is terminated.

In the above embodiments, the case of applying the present invention when displaying a message and an animation in the scenario mode intervening between RPG games has been described above. However, the present invention is not limited to these embodiments, and can be applied to the case where a variety of interrupt processing occurs.

For example, when the player opens a menu window during a game and changes the basic settings of the game, the game is temporarily suspended. Although the player changes the settings by moving a cursor or the like in the menu window while performing an input operation, a game screen is continuously displayed outside the menu window. In this case, the character display processing of the present invention can be applied to a character that is being displayed outside the menu window.

In addition, for example, when the player plays a game alone in the game apparatus and receives a request for a match play or a team play from another game through wireless communication, the game may be temporarily suspended. In this case, a message display window is opened at a portion of the display screen, and the indication of a request for a match play or a team play is displayed. The player selects whether to accept the request for a match play or a team play. While the game is temporarily suspended, an aspect of the virtual world is continuously displayed outside the message display window and an appearing character is also being displayed. The character display processing of the present invention can be applied to the appearing character.

## Claims

1. A character display device which displays a character of an arbitrary pose on a display screen, comprising:
a basic behavior information memory that stores basic behavior information for controlling a behavior of a virtual skeleton of a character in a basic pose of the character;
a virtual skeleton controller that controls a behavior of the virtual skeleton of the character in an arbitrary pose based on the basic behavior information stored in the basic behavior information memory; and
a character displayer that displays the character by modeling the character based on the virtual skeleton controlled by the virtual skeleton controller.

2. The character display device according to claim 1, wherein the virtual skeleton controller includes a behavior information decider that decides a behavior information about the behavior of the virtual skeleton of the character corresponding to the arbitrary pose based on the basic behavior information stored in the basic behavior information memory, and the virtual skeleton controller controls the behavior of the virtual skeleton of the character in the arbitrary pose based on the behavior information decided by the behavior information decider.

3. The character display device according to claim 1 or 2, wherein when a region of the character is fixed at a specific position, the virtual skeleton controller uses inverse kinematics to control the behavior of the virtual skeleton such that the portion maintains a fixed state.

4. The character display device according to any one of claims 1 to 3, wherein the basic behavior information memory stores a plurality of pieces of basic behavior information in association with a plurality of respective different conditions, and the behavior information decider decides the basic behavior information according to the condition.

5. A character display method which is executed to display a character of an arbitrary pose on a display screen of a computer apparatus, comprising:
storing basic behavior information for controlling a behavior of a virtual skeleton of a character in a basic pose of the character, in a memory;
controlling a behavior of the virtual skeleton of the character in an arbitrary pose based on the basic behavior information stored in the memory; and
displaying the character by modeling the character based on the virtual skeleton with the controlled behavior.

6. A character display program which executes a computer apparatus to display a character of an arbitrary pose on a display screen, the character display program causing the computer apparatus to function as:
a basic behavior information memory that stores basic behavior information for controlling a behavior of a virtual skeleton of a character in a basic pose of the character;
a virtual skeleton controller that controls a behavior of the virtual skeleton of the character in an arbitrary pose based on the basic behavior information stored in the basic behavior information memory; and
a character displayer that displays the character by modeling the character based on the virtual skeleton controlled by the virtual skeleton controller.
